# EUROPÄISCHE PATENTSCHRIFT

(11) **EP 1 266 496 B1**
(45) Veröffentlichungstag und Bekanntmachung des Hinweises auf die Patenterteilung: **18.08.2004**
(21) Anmeldenummer: 01915091.1
(22) Anmeldetag: 07.03.2001
(51) Int. Cl.: H04L 12/56, H04L 12/64

(54) **VERFAHREN UND ANORDNUNG ZUR ZULÄSSIGKEITSPRÜFUNG EINER DIENSTNUTZUNG**
METHOD AND ARRANGEMENT FOR CHECKING WHETHER THE USE OF A SERVICE IS PERMISSIBLE
PROCEDE ET DISPOSITIF DE CONTROLE D'ADMISSIBILITE D'UNE UTILISATION DE SERVICE

(30) Priorität: 23.03.2000 DE 10014522
(43) Veröffentlichungstag der Anmeldung: 18.12.2002
(73) Patentinhaber: SIEMENS AKTIENGESELLSCHAFT, 80333 München (DE)
(72) Erfinder: RANSMAYR, Viktor, 80799 München (DE); BITZINGER, Rudolf, 81476 München (DE); PREHOFER, Christian, 81477 München (DE)
(86) Internationale Anmeldenummer: PCT/DE2001/000863
(87) Internationale Veröffentlichungsnummer: WO 2001/071988

(56) Entgegenhaltungen:
- EP-A- 0 673 138
- EP-A- 0 883 324
- US-A- 5 862 126
- SEDDIGH N ET AL: "EXPERIMENTAL STUDY OF ASSURED SERVICES IN A DIFFSERV IP QOS NETWORK" PROCEEDINGS OF THE SPIE, 2. November 1998 (1998-11-02), XP000956310

## Beschreibung

Zeitgemäße paketorientierte Kommunikationsnetze - auch 'Datennetze' genannt - sind bisher im wesentlichen auf die Übermittlung von in der Fachwelt auch als 'Datenpaketströme' bezeichneten Paketströmen ausgelegt. Hierbei ist üblicherweise keine garantierte Übermittlungs-Dienstgüte erforderlich. So erfolgt die Übermittlung der Datenpaketströme z.B. mit zeitlich schwankenden Verzögerungen, da die einzelnen Datenpakete der Datenpaketströme üblicherweise in der Reihefolge ihres Netzzugangs übermittelt werden, d.h. die zeitlichen Verzögerungen werden umso größer, je mehr Pakete von einem Datennetz zu übermitteln sind. In der Fachwelt wird die Übermittlung von Daten deshalb auch als Übermittlungsdienst ohne Echtzeitbedingungen bzw. als 'Non-Realtime-Service' bezeichnet.

Im Zuge der Konvergenz von leitungsorientierten Sprach- und paketorientierten Datennetzen werden zunehmend Echtzeitdienste bzw. 'Realtime-Services', d.h. Übermittlungsdienste unter Echtzeitbedingungen wie z.B. die Übermittlung von Sprachoder Bewegtbildinformationen, ebenfalls in paketorientierten Kommunikationsnetzen realisiert, d.h. die Übermittlung der bisher üblicherweise leitungsorientiert übermittelten Echtzeitdienste erfolgt in einem konvergenten Sprach-Daten-Netz paketorientiert, d.h. in Paketströmen. Diese werden auch 'Echtzeitpaketströme' genannt. Hierbei ergibt sich das Problem, dass für eine als paketorientierte Übermittlung ausgebildete Realisierung eines Echtzeitdienstes eine hohe Dienstgüte erforderlich ist, damit diese mit einer leitungsorientierten Übermittlung qualitativ vergleichbar bleibt. Insbesondere ist eine minimale - z.B. < 200 ms - Verzögerung ohne Schwankungen der Verzögerungszeit wichtig, da Echtzeitdienste im allgemeinen einen kontinuierlichen Informationsfluss erfordern und einen Informationsverlust, z.B. bedingt durch Paketverluste, nicht durch ein nochmaliges Übermitteln der verworfenen Pakete ausgleichen können. Da diese Dienstgüte-Anforderungen grundsätzlich für alle Kommunikationsnetze mit paketorientierter Übermittlung gelten, sind sie unabhängig von der konkreten Ausgestaltung eines paketorientierten Kommunikationsnetzes. Die Pakete können folglich als Internet-, X.25- oder Frame-Relay-Pakete, aber auch als ATM-Zellen ausgebildet sein. Datenpaketströme und Echtzeitpaketströme sind hierbei Ausführungsbeispiele von in Kommunikationsnetzen übermittelten Verkehrsströmen.

Für die Übermittung von Sprach- und Bildinformationen über das paketorientierte Internet - auch 'VoIP' genannt - sind in den internationalen Standards - insbesondere den H.323 Standards - Protokolle für eine Übermittlung durch das Internet vorgeschlagen. Hierbei wird das Netz in mehrere 'H.323 Zonen' gegliedert, in denen jeweils sogenannte 'Gatekeeper' vorgesehen sind zur
- Umsetzung von E.164-Telephonnummern auf Rechnernamen bzw. deren Internetadressen
- Zulässigkeitsprüfung für eingehende und ausgehende Gespräche
- Verwaltung von Übermittlungskapazitäten
- Registrierung von H.323-Endgeräten

Da in den aktuellen H.323 Standards jedoch keine garantierte Dienstgüte für die Internet-Übermittlung vorgesehen ist, hat die derzeitige VoIP-Technik den Nachteil, dass die Qualität der Sprach- und Bildübermittlung abnimmt, wenn die Zahl der von dem Internet zu übermittelnden Pakete ansteigt. Bei der IETF (Internet Engineering Task Force) ist hierzu in Blake et. al., "An Architecture for Differentiated Services", RFC 2475, 1998, ftp://venera.isi.edu/in-notes/rfc2475.txt und in Nichols et. al, "Definition of the Differentiated Services Field (DS Field) in the IPv4 and IPv6 Headers", RFC 2474, 1998, ftp://venera.isi.edu/in-notes/rfc2474.txt vorgeschlagen, im bisher keine Dienstgüten garantierenden paketorientierten Internet mehrere Service-Klassen einzuführen. Ein derartiges Internet wird auch als 'DiffServ-Netz' bezeichnet. Hierbei werden die einzelnen Paketströme jeweils einer bestimmten Service-Klasse zugeordnet und von den Übermittlungsknoten des Internets entsprechend ihrer Service-Klasse gegenüber Paketen anderer Service-Klassen bevorzugt oder benachteiligt übermittelt. Somit kann die für die Echtzeitdienste geforderte Dienstgüte beispielsweise dadurch gewährleistet werden, dass die zugehörigen Echtzeitpaketströme einer Service-Klasse zugeordnet werden, die von den Knoten des Internets bevorzugt übermittelt wird - die Echtzeitpaketströme sind somit gegenüber den Datenpaketströmen priorisiert.

Durch die Bildung einer Klasse von priorisiert zu übermittelnden Verkehrsströmen wird innerhalb des Internets ein (virtuelles) separates Kommunikationsnetz zu Übermittlung der priorisierten Verkehrsströme mit einer separaten Gesamtübermittlungskapazität gebildet, die einen Teil der Gesamtübermittlungskapazität des Internets umfasst. Als Gesamtübermittlungskapazität eines aus Übermittlungsknoten und -wegen bestehenden Kommunikationsnetzes wird hierbei diejenige Kapazität angesehen, die für eine Übermittlung der gerade noch ohne Verkehrsverlust übermittelbaren Verkehrsströme erforderlich ist. In anderen Worten ausgedrückt bedeutet dies, dass kein weiterer Verkehrsstrom in dem Kommunikationsnetz ohne Verkehrsverlust übermittelt werden könnte. Die noch verfügbare Übermittlungskapazität einer gegebenen Route zwischen zwei Übermittlungknoten des Kommunikationsnetzes hängt demnach nicht nur von dem Verkehr ab, der direkt zwischen diesen beiden Übermittlungknoten übermittelt wird, sondern auch von demjenigen Verkehr, der in Folge einer Übermittlung entlang anderer Routen in dem Kommunikationsnetz zumindest teilweise entlang der gegebenen Route übermittelt wird.

Bei einer prioritätsgesteuerten Übermittlung ist grundsätzlich zumindest für den priorisierten Verkehr eine Netzzugangskontrolle erforderlich, da die geforderte Dienstgüte nur dann gewährleistet werden kann, wenn dem Kommunikationsnetz nicht mehr priorisierter Verkehr zugeführt wird als von diesem maximal übermittelt werden kann. Hierzu sind für das Internet mit mehreren Service-Klassen Netzübergangseinrichtungen - auch 'Edgedevices' bzw. aus Sicht des Kommunikationsnetzes auch 'Zugangsknoten' genannt - vorgeschlagen, von denen die Netzzugangskontrolle bewirkt wird. Hierbei können die Edgedevices
- das Volumen des dem Kommunikationsnetz durch Paketströme zugeführten Verkehrs steuern;
- Prioritätskennzeichen in den Paketen entsprechend der Priorität ihrer Paketströme setzen;
- Prioritätskennzeichen von Paketströmen kontrollieren und gegebenenfalls korrigieren, falls die Pakete bereits mit Prioritäten gekennzeichnet sind;
- die Übermittlungskapazität von priorisierten Paketströmen kontrollieren.

Nicht geregelt ist bisher, wie eine Zulässigkeitsprüfung einer z.B. bei einem Gatekeeper und/oder einem Edgedevice beantragten Übermittlung eines Paketstroms in diesem Kontext bewirkt werden soll.

Bekannt ist ein Verfahren, bei dem mit Hilfe eines Reservierungsprotokolls RSVP für die Übermittlung eines Paketstrom erforderliche Resourcen von jedem Übermittlungsknoten eines Kommunikationsnetzes angefordert werden und die Übermittlung des Paketstroms unterbleibt, sofern zumindest ein Übermittlungsknoten die angeforderten Resourcen nicht zur Verfügung stellen kann. In den Übermittlungsknoten wird hierbei die Zulässigkeitsüberprüfung lediglich unter Berücksichtigung von lokal ermittelbaren Kapazitäten geprüft, d.h. üblicherweise den Kapazitäten der abgehenden Übermittlungswege und/oder - kanäle. Zudem muss das Reservierungsprotokoll RSVP in jedem - d.h. auch den internen - Übermittlungsknoten des Kommunikationsnetzes realisiert werden.

In dem Dokument EP-A-0 673 138 ist eine Verfahren zur Prüfung der Zulässigkeit einer neuen Verbindung, die in einem verbindungsorientierten ATM Netz eingerichtet werden soll, offenbart mit folgenden Schritten:
- bei einem Zugangsknoten des ATM Netzes wird die Einrichtung der neuen Verbindung beantragt;
- vom dem Zugangsknoten wird daraufhin eine SET UP Nachricht an diejenigen internen Knoten gesendet, entlang derer die Verbindung durch das ATM Netz geführt wird;
- von jedem dieser Knoten wird für denjenigen abgehenden Übertragungskanal, der für die Übertragung der beantragten neue Verbindung erforderlich ist, geprüft, ob die beantragte Verbindung unter Berücksichtigung der bereits durch Übertragung anderer Verbindungen bestehenden Auslastung dieses Kanals zugelassen wird;
- die beantragte Verbindung wird dann zugelassen, wenn alle internen Netzknoten entlang der Route ein positives Prüfergebnis anzeigen.

Der Erfindung liegt die Aufgabe zugrunde, ein Verfahren zur Prüfung der Zulässigkeit der Übermittlung eines Paketstroms in einem Kommunikationsnetz auszugestalten. Die Aufgabe wird durch die Merkmale des Patentanspruchs 1 gelöst.

Der wesentliche Aspekt der Erfindung besteht in einer Zulässigkeitsprüfung einer bei einer Zugangssteuerfunktion beantragten Nutzung eines in zumindest einem, eine Gesamtübermittlungskapazität aufweisenden Kommunikationsnetz realisierten Dienstes, bei der von der Zugangssteuerfunktion unter Berücksichtigung einer, unter Berücksichtigung der Gesamtübermittlungskapazität ermittelten, verfügbaren Kapazität, die einem der Zugangssteuerfunktion zugeordneten Zugangsknoten zur Übermittlung von Verkehrsströmen an das Kommunikationsnetz zur Verfügung steht, geprüft wird, ob die beantragte Nutzung des Dienstes zugelassen wird.

Einige wesentliche Vorteile der Erfindung seien im folgenden genannt:
- Die Zugangssteuerung kann flexibel auf Änderungen der Gesamtübermittlungskapazität durch Änderung der verfügbaren Kapazität angepasst werden.
- Die Zulässigkeitsprüfung wird alleinig von der Zugangssteuerfunktion bewirkt wird. Somit ist in den Übermittlungsknoten des Kommunikationsnetzes keine Prüfung der beantragten Nutzung des Dienstes erforderlich. Hiermit ist der besonders schöne Vorteil verbunden, dass die Erfindung ohne Änderungen der Übermittlungsknoten des Kommunikationsnetzes eingesetzt werden kann.
- Die Nutzung des Dienstes kann ohne Angabe einer erwünschten Dienstgüte beantragt werden. Somit ist für den Antrag der Nutzung des Dienstes vorteilhaft keine Ermittlung einer derartigen Dienstgüte durch den Antragsteller erforderlich.

Gemäß einer Weiterbildung des erfindungsgemäßen Verfahrens ist vorgesehen, dass der Dienst als mit Hilfe von bevorzugt übermittelten Verkehrsströmen bewirkte Übermittlung von Informationen, insbesondere Sprachinformationen, ausgebildet ist - Anspruch 2. Somit werden z.B. in einem paketorientierten Kommunikationsnetz vorteilhaft die besonderen Dienstgüte-Anforderungen einer Übermittlung von Sprachinformationen in einem integrierten Sprach-Daten-Netz erfüllt.

Entsprechend einer Ausgestaltung des erfindungsgemäßen Verfahrens hängt die Gesamtübermittlungskapazität zumindest teilweise von den Übermittlungskapazitäten der Übermittlungswege des Kommunikationsnetzes ab - Anspruch 3. Hierdurch wird der Gesamtübermittlungskapazität des Kommunikationsnetzes sehr effizient berücksichtigt, da diese Werte statisch sind und somit ohne aufwändige Berechnungsverfahren ermittelt werden können. Sofern die Übermittlungskapazitäten der Übermittlungswege in den lokalen Routing-Tabellen der Übermittlungsknoten gespeichert sind, können sie diesen vorteilhaft sehr effizient und im wesentlichen ohne Informationsübermittlungen in dem Kommunikationsnetz entnommen werden.

Gemäß einer Ausgestaltung des erfindungsgemäßen Verfahrens erfolgt die Prüfung der Zulässigkeit unter Berücksichtigung einer für die Nutzung des Dienstes erforderlichen Dienstgüte, die von der Zugangssteuerfunktion bestimmt wird - Anspruch 4. Somit wird vorteilhaft ein Traffic Management realisiert, indem z.B. für Verkehrsströme, die Informationen z.B. in Echtzeit, d.h. mit möglichst geringen Verzögerungszeiten, und/oder mit einer bestimmten Kapazität übermitteln eine entsprechende hohe Dienstgüte und für Verkehrsströme, die Informationen mit variablen Verzögerungszeiten und/oder mit unbestimmter Kapazität übermitteln eine entsprechend niedrige Dienstgüte garantiert wird. Beispiele für Informationen, die eher mit hoher Dienstgüte übermittelt werden, sind Sprachoder Bildtelephonie. Beispiele für Informationen, die eher mit niedriger Dienstgüte übermittelt werden, sind EMail, Dateien oder Internet-Seiten. Das Traffic Management kann auch in Abhängigkeit von dem Nutzer des Dienstes erfolgen. Beispielsweise wird einem Stammkunde für jede Nutzung des Dienstes jeweils eine hohe Dienstgüte zugeteilt und einem gelegentlichen Nutzer eine niedrigere.

Nach einer Variante des erfindungsgemäßen Verfahrens wird bei Angabe einer erwünschten Dienstgüte bei der Beantragung der Nutzung des Dienstes diese von der Zugangssteuerfunktion bei der Bestimmung der erforderlichen Dienstgüte berücksichtigt - Anspruch 5. Somit wird z.B. eine voreingestellte erforderliche Dienstgüte 'on demand' an die Erfordernisse des Antragstellers angepasst, ohne dass die Voreinstellung geändert werden muss.

Gemäß einer Ausgestaltung des erfindungsgemäßen Verfahrens ist vorgesehen, dass das Kommunikationsnetz als ein Verkehrsströme mit einer garantierten Dienstgüte paketorientiert übermittelndes DiffServ-Netz ausgebildet ist - Anspruch 6. Die Zulässigkeitsprüfung erfolgt erfindungsgemäß verkehrsstromindividuell. In der Anwendung der Erfindung in einem DiffServ-Netz liegt somit ein besonderer Vorteil, da in einem DiffServ-Netz keine Übermittlung mit garantierter verkehrsstromindividueller Dienstgüte vorgesehen ist, sondern lediglich eine bevorzugte Übermittlung aller priorisierten Verkehrsströme.

Nach einer Weiterbildung des erfindungsgemäßen Verfahrens ist vorgesehen, dass von der Zugangssteuerfunktion die Zulässigkeit des bei Nutzung des Dienstes bevorzugt zu übermittelnden Verkehrsstroms dem zugeordneten Zugangsknoten mitgeteilt und von diesem anschließend der Verkehrsstrom bevorzugt an das DiffServ-Netz übermittelt wird - Anspruch 7. Hierdurch wird vorteilhaft bewirkt, dass der Verkehrsstrom von dem Zugangsknoten mit der erforderlichen Dienstgüte an das Kommunikationsnetz übermittelt wird.

Entsprechend einer Ausgestaltung des erfindungsgemäßen Verfahrens ist die Zugangssteuerfunktion in einem Gatekeeper realisiert - Anspruch 8. Somit wird das erfindungsgemäße Verfahren vorteilhaft nahtlos in die bestehende Infrastruktur eines zeitgemäßen Internets, insb. eines DiffServ-Netzes, eingefügt. Zudem kann die erfindungsgemäße Zulässigkeitsprüfung in die im Standard H.323 festgelegte Zulässigkeitsprüfung des Gatekeepers integriert werden, wodurch vorteilhaft das Außenverhalten der bisherigen Zulässigkeitsprüfung im Wesentlichen unverändert bleibt. Zudem werden die Übermittlungsknoten das Kommunikationsnetzes entlastet, da in ihnen keine Zulässigkeitsprüfung erforderlich ist.

Weitere vorteilhafte Ausgestaltungen der Erfindung ergeben sich aus den unter- oder nebengeordneten Ansprüchen.

Das erfindungsgemäße Verfahren wird im folgenden anhand einer Figur näher erläutert.

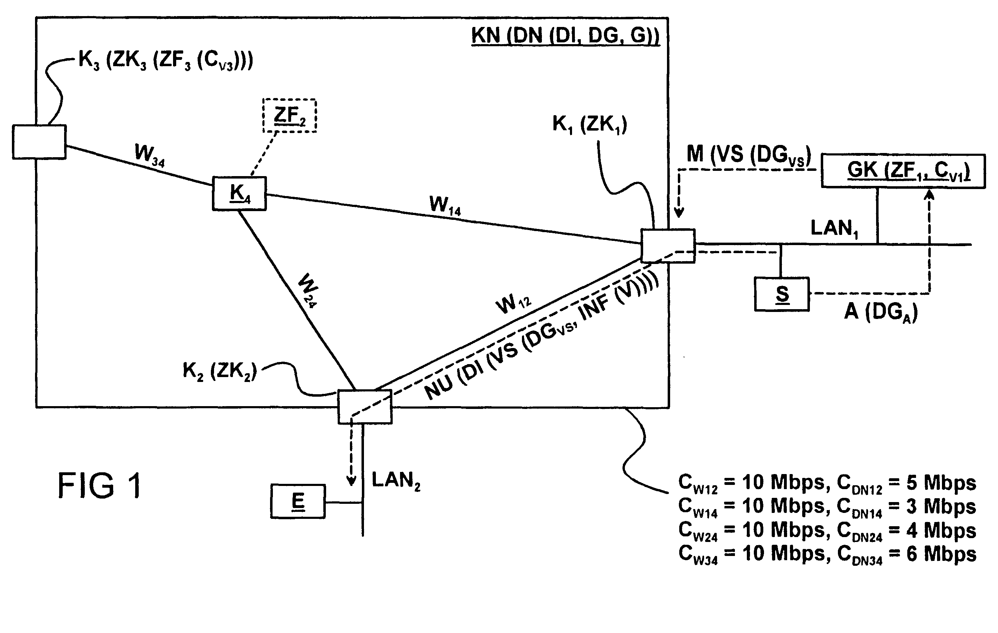

Dabei zeigt Figur 1 in einem Blockschaltbild beispielhaft ein Kommunikationsnetz KN mit einer Gesamtübermittlungskapazität G. Das Kommunikationsnetz KN ist z.B. als einen Dienst DI mit einer Dienstgüte DG garantierendes DiffServ-Netz DN ausgebildet. Der Dienst DI ist z.B. eine Übermittlung von Verkehrsströmen VS mit einer Dienstgüte DG_{VS}, die z.B. durch bevorzugte Übermittlung der Verkehrsströme VS bewirkt wird. Das Kommunikationsnetz KN umfasse vier Übermittlungsknoten K, von denen der erste Übermittlungsknoten K, als erster Zugangsknoten ZK₁, der zweite Übermittlungsknoten K₂ als zweiter Zugangsknoten ZK₂ und der dritte Übermittlungsknoten K₃ als dritter Zugangsknoten ZK₃ ausgebildet sind. Von den Zugangsknoten ZK werden Verkehrsströme VS an das Kommunikationsnetz KN übermittelt.

Die Übermittlungsknoten sind durch vier, Übermittlungskapazitäten C_{W} ausweisende Übermittlungswege W₁₂, W₁₄, W₂₄ und W₃₄ miteinander verbunden, wobei durch die Indizes diejenigen Übermittlungsknoten Kᵢ und Kⱼ angezeigt werden, zwischen denen der Übermittlungsweg Wᵢⱼ vorgesehen ist. Hierbei seinen von den Übermittlungskapazitäten C_{W} der Übermittlungswege W folgende Kapazitäten C_{DN} für das DiffServ-Netz DN reserviert:

| Übermittlungsweg W | Kapazität C_{W} | Kapazität C_{DN} |
|---|---|---|
| M₁₂ | C_{W12} = 100 Mbps | C_{DN12} = 5 Mbps |
| W₁₄ | C_{W14} = 10 Gbps | C_{DN14} = 3 Mbps |
| W₂₄ | C_{W24} = 10 Gbps | C_{DN24} = 4 Mbps |
| W₃₄ | C_{W34} = 10 Mbps | C_{DN34} = 6 Mbps |

An den Zugangsknoten K₁ ist ein erstes lokales Netz LAN₁ angeschlossen mit einem Sender S und einem Gatekeeper GK. An den Zugangsknoten K₂ ist ein zweites lokales Netz LAN₂ angeschlossen mit einem Empfänger E.

Weiterhin sind mehrere Möglichkeiten zur Realisierung einer Zugangssteuerfunktion ZF beispielhaft ausgeführt:
- Eine dezentrale, zugangsknotenindividuelle Realisierung als Zugangssteuerfunktion ZF₁ in dem Gatekeeper GK, die dem Zugangsknoten ZK₁ zugeordnet sei. Eine Zulässigkeitsprüfung von durch den Zugangsknoten ZK₁ an das Kommunikationsnetz KN zu übermittelnden Verkehrsströmen VS erfolgt hierbei unter Berücksichtigung einer für den zugeordneten Zugangsknoten ZK₁ verfügbaren Kapazität C_{V1}.
- Eine zentrale Realisierung als Zugangssteuerfunktion ZF₂, die physikalisch über den Übermittlungsknoten K₄ erreicht wird. Sie dient z.B. zur Ermittlung von für ggf. Zugangsknoten K des DiffServ-Netzes DN jeweils verfügbaren Kapazitäten C_{V}, die diesen z.B. auf Nachfrage mitgeteilt werden.
- Eine dezentrale, zugangsknotenindividuelle Realisierung als Zugangssteuerfunktion ZF₃ in dem Zugangsknoten ZK₃, wodurch sie diesem Knoten implizit zugeordnet sei. Eine Zulässigkeitsprüfung von durch den Zugangsknoten ZK₃ an das Kommunikationsnetz KN zu übermittelnden Verkehrsströmen VS erfolgt hierbei unter Berücksichtigung einer für den zugeordneten Zugangsknoten ZK₃ verfügbaren Kapazität C_{V3}.

Zudem sind folgende Informationsübermittlungen angedeutet:
- Nutzung NU des z.B. als Informationsübermittlung ausgebildeten Dienstes DI, bei der von dem Sender S zum dem Empfänger E entlang der Route S => K₁ => K₂ => E ein Verkehrsstrom VS mit z.B. als Sprachinformationen V ausgebildeten Informationen INF übermittelt wird. Zumindest in dem Kommunikationsnetz KN wird hierbei der Verkehrsstrom VS mit einer erforderlichen Dienstgüte DG_{VS} übermittelt.
- Antrag A von dem Sender S an den Gatekeeper GK mit dem die Nutzung NU beantragt wird. In dem Antrag A ist ggf. eine erwünschte Dienstgüte DG_{A} angegeben.
- Optionale Meldung M von der in dem Gatekeeper GK realisierten Zugangssteuerfunktion ZF₁ an den zugeordneten Zugangsknoten ZK₁ mit Angabe des zugelassenen Verkehrsstroms VS sowie ggf. dessen zur Übermittlung erforderlicher Dienstgüte DG_{VS}.

Für ein Ausführungsbeispiel der Erfindung sei angenommen, dass die Zugangssteuerfunktion ZF dezentral und zugangsknotenindividuell als Zugangssteuerfunktion ZF₁ in dem Gatekeeper GK realisiert und dass das Kommunikationsnetz KN als DiffServ-Netz DN ausgebildet sei.

Von dem Sender S wird mit dem Auftrag A bei dem Gatekeeper GK die Nutzung NU des Dienstes DI beantragt. Hierbei wird z.B. die erwünschte Dienstgüte DG_{A} angegeben. Beispielsweise sei der Dienst DI als Übermittlung von Sprachinformationen V ausgebildet und als Dienstgüte DG_{A} wird eine kontinuierliche Übermittlungskapazität von 64 kbps angegeben.

Die Zugangsprüfung erfolge z.B. auf Basis folgender verfügbarer Kapazitäten C_{V}:

| Zugangsknoten | verfügbare Kapazität C_{V} |
|---|---|
| ZK₁ | C_{V1} = 2 Mbps |
| ZK₂ | C_{V2} = 3 Mbps |
| ZK₃ | C_{V3} = 1 Mbps |

Somit steht im Beispiel zwar allen Zugangsknoten ZK₁ und ZK₂ weniger Kapazität C_{V} zur Verfügung, als auf den Übermittlungswegen W an für das DiffServ-Netz DN reservierten Kapazitäten C_{DN} vorgesehen ist. Hiermit ist jedoch der Vorteil verbunden, dass auch bei voller Ausschöpfung jeder der verfügbaren Kapazitäten C_{V} durch die Zugangsknoten ZK auf keinem der Übermittlungswege W des gesamten (!) Kommunikationsnetzes KN die für das DiffServ-Netz reservierte Kapazität C_{DN} überschritten werden kann, da:
- C_{DN12} (5 Mbps) >= C_{V1} (2 Mbps) + C_{V2} (3 Mbps)
- C_{DN14} (3 Mbps) >= C_{V1} (2 Mbps) + C_{V3} (1 Mbps)
- C_{DN24} (4 Mbps) >= C_{V2} (3 Mbps) + C_{V3} (1 Mbps)
- C_{DN34} (6 Mbps) >= C_{V1} (2 Mbps) + C_{V2} (3 Mbps) + C_{V3} (1 Mbps)

Bei diesem Beispiel ist angenommen, dass alle Informationsströme jeweils entlang der Route mit der geringsten Anzahl von Übermittlungsknoten K - auch 'least hops' genannt - verlaufen. Die Gesamtübermittlungskapazität G hängt bei diesem Ausführungsbeispiel im wesentlichen von der Übermittlungskapazität der Übermittlungswege W des als DiffServ-Netz DN ausgebildeten Kommunikationsnetzes KN ab, ist jedoch nicht hierauf begrenzt. Sie kann z.B. auch von den Übermittlungskapazitäten der Übermittlungsknoten abhängen. Bei einer derart erfindungsgemäß unter Berücksichtigung der Gesamtübermittlungskapazität G des DiffServ-Netzes DN bewirkten Festlegung der verfügbaren Kapazitäten C; ist vorteilhaft keine Zulässigkeitsprüfung in den internen Übermittlungsknoten K des Kommunikationsnetzes KN erforderlich.

Der Zugangssteuerfunktion ZF ist die dem Zugangsknoten ZK₃ zur Übermittlung von Verkehrsströmen VS an das DiffServ-Netz DN zur Verfügung stehende Kapazität C_{V1} von 2 Mbps bekannt. Somit können z.B. 32 Telephongespräche mit einer die Dienstgüte DG_{VS} maßgeblich beeinflussenden Kapazität von 64 kbps, 64 Telephongespräche mit einer Kapazität von 32 kbps oder 128 Telephongespräche mit einer Kapazität von 16 kbps übermittelt werden. Es sind beliebige andere Verteilungen der Dienstgüte DG möglich. So kann z.B. auch ein Mix vorgesehen werden, z.B. bis zu 20 Telephongespräche mit einer Kapazität von 64 kbps, weitere bis zu 20 mit einer Kapazität von 32 kbps und die verbleibenden bis zu 8 Telephongespräche mit einer Kapazität von 16 kbps. Im weiteren sei letztere Verteilung angenommen.

Nach Empfang des Antrags A wird von der Zugangssteuerfunktion ZF₁ die Zulässigkeit der beantragten Nutzung NU geprüft. Zum Zeitpunkt der Prüfung seien 20 Telephongespräche mit einer Kapazität von 64 kbps, 10 Telephongespräche mit einer Kapazität von 32 kbps und 3 Telephongespräche mit einer Kapazität von 16 kbps zugelassen - d.h. von der verfügbaren Kapazität C_{V1} sind zur Zeit 1648 kbps vergeben und 400 kbps frei. Somit ist unter Berücksichtigung der verfügbaren Kapazität C_{V1} die beantragte Nutzung NU des Dienstes DI grundsätzlich zulässig.

Zudem sei konfiguriert, dass der Sender S Telephongespräche üblicherweise mit einer Kapazität von 16 kbps führt, sofern keine erwünschte Dienstgüte DG_{A} im Antrag A angegeben ist. Die vom Sender S erwunschte Dienstgüte DG_{A} von 64 kbps ist nicht zulässig, da zur Zeit alle 20 vorgesehen Telephongespräche mit 64 kbps vergeben sind. Deshalb wird von der Zugangssteuerfunktion ZF₁ unter Berücksichtigung der erwünschten Dienstgüte DG_{A} von 64 kbps als erforderliche Dienstgüte DG_{VS} eine Übermittlung mit 32 kbps anstelle der üblicherweise vorgesehenen 16 kbps bestimmt und die beantragte Nutzung NU mit dieser erforderliche Dienstgüte DG_{VS} zugelassen.

Gemäß einer Variante der Erfindung wird die Zulässigkeit der beantragten Nutzung NU dem Zugangsknoten ZK₁ mitgeteilt. Bei einer zugangsknotenindividuellen Realisierung der Zugangssteuerfunktion ZF erfolgt dies z.B, indem ein die Zulässigkeit anzeigender Wert in einem Speichermedium des Zugangsknotens ZK hinterlegt wird. Bei einer von dem Zugangsknoten ZK abgesetzten Realisierung der Zugangsfunktion ZF wird die Zulässigkeit z.B. mit zumindest einer an den Zugangsknoten ZK übermittelten Meldung M an den Zugangsknoten ZK gesendet.

Es sei darauf hingewiesen, dass die Erfindung nicht auf Diff-Serv-Netze DN beschränkt ist, sondern in jedem Kommunikationsnetz KN mit Dienstgüten DG angewandt werden kann. Beispielsweise ist die Anwendung in lokalen Netzen LAN₁, LAN₂ vorgesehen. Hierbei sind die Zugangsknoten ZK z.B. als in dem Sender S bzw. in dem Empfänger E vorgesehene Zugangskarten bzw. als Zugangsfunktionalitäten zu den lokalen Netzen LAN ausgebildet. Nach erfindungsgemäß geprüfter Zulässigkeit werden Sprachinformationen V in den lokalen Netzen LAN mit entsprechenden erforderlichen Dienstgüten DG_{VS} übermittelt.

## Patentansprüche

1. Verfahren zur Prüfung der Zulässigkeit einer Nutzung (NU) eines in zumindest einem, eine Gesamtübermittlungskapazität (G) aufweisenden Kommunikationsnetz (KN) realisierten Dienstes (DI), bei der während der Nutzung (NU) zumindest ein dem Dienst (DI) zugeordneter dienstspezifischer Verkehrsstrom (VS) von einem dem Dienst (DI) zugeordneten Zugangsknoten (ZK) an das Kommunikationsnetz (KN) übermittelt wird, mit folgenden Schritten
(1) die Nutzung (NU) wird bei einer dem Zugangsknoten (ZK) zugeordneten Zugangssteuerfunktion (ZF) beantragt,
(2) von der Zugangssteuerfunktion (ZF) wird ohne weitere Nachfragen bei internen Übermittlungsknoten des Kommunikationsnetzes (KN) geprüft, ob die beantragte Nutzung (NU) des Dienstes (DI) zugelassen wird,
wobei die Prüfung unter Berücksichtigung einer
- unter Berücksichtigung der Gesamtübermittlungskapazität (G) ermittelten, und
- dem Zugangsknoten (ZK) zur Übermittlung von Verkehrsströmen (VS) an das Kommunikationsnetz zur Verfügung stehenden,
verfügbaren Kapazität (C_{V}) erfolgt.

2. Verfahren nach Anspruch 1,
**dadurch gekennzeichnet,**
**dass** der Dienst (DI) als mit Hilfe von bevorzugt übermittelten Verkehrsströmen (VS) bewirkte Übermittlung von Informationen (INF), insbesondere Sprachinformationen (V), ausgebildet ist.

3. Verfahren nach einem der Ansprüche 1 oder 2,
**dadurch gekennzeichnet,**
**dass** die Gesamtübermittlungskapazität (G) zumindest teilweise von den Übermittlungskapazitäten (C) der Übermittlungswege (W) des Kommunikationsnetzes (KN) abhängt.

4. Verfahren nach einem der Ansprüche 1 bis 3,
**dadurch gekennzeichnet,**
**dass** die Prüfung der Zulässigkeit unter Berücksichtigung einer für die Nutzung (NU) des Dienstes (DI) erforderlichen Dienstgüte (DG_{VS}) erfolgt, die von der Zugangssteuerfunktion (ZF) bestimmt wird.

5. Verfahren nach Anspruch 4,
**dadurch gekennzeichnet,**
**dass** bei Angabe einer erwünschten Dienstgüte (DG_{A}) bei der Beantragung der Nutzung (NU) des Dienstes (DI) diese von der Zugangssteuerfunktion (ZF) bei der Bestimmung der erforderlichen Dienstgüte (DG_{VS}) berücksichtigt wird.

6. Verfahren nach einem der vorstehenden Ansprüche,
**dadurch gekennzeichnet,**
**dass** das Kommunikationsnetz (KN) als ein Verkehrsströme (VS) mit einer garantierten Dienstgüte (DG) paketorientiert übermittelndes DiffServ-Netz (DN) ausgebildet ist.

7. Verfahren nach den Ansprüchen 2 und 6
**dadurch gekennzeichnet,**
**dass** von der Zugangssteuerfunktion (ZF) die Zulässigkeit des bei Nutzung (NU) des Dienstes (DI) bevorzugt zu übermittelnden Verkehrsstroms (VS) dem zugeordneten Zugangsknoten (ZK) mitgeteilt und von diesem anschließend der Verkehrsstrom (VS) bevorzugt an das DiffServ-Netz (DN) übermittelt wird.

8. Verfahren nach einem der vorstehenden Ansprüche,
**dadurch gekennzeichnet,**
**dass** die Zugangssteuerfunktion (ZF) in einem Gatekeeper (GK) realisiert ist.

9. Vorrichtung - insbesondere Gatekeeper (GK) oder Übermittlungsknoten (K) -, umfassend Mittel zur Durchführung der Schritte eines Verfahrens nach einem der vorstehenden Ansprüche.

10. Kommunikationsnetz (KN), umfassend zumindest einen Übermittlungsknoten (K) - insbesondere Zugangsknoten (K) - gemäß Anspruch 9.

11. H.323 Zone oder Zugangsnetz (LAN) eines Kommunikationsnetzes (KN), umfassend zumindest einen Gatekeeper (GK) gemäß Anspruch 9.

## Claims

1. Method for checking whether a use (NU) of a service (DI) which is implemented in at least one communications network (KN) having an overall transmission capacity (G) is permissible, during which checking, during the use (NU), at least one service-specific traffic stream (VS) which is assigned to the service (DI) is transmitted by an access node (ZK) assigned to the service (DI) to the communications network (KN), having the following steps:
(1) the use (NU) is applied for with an access control function (ZF) which is assigned to the access node (ZK),
(2) the access control function (ZF) checks, without further interrogations at internal transmission nodes of the communications network (KN), as to whether the applied-for use (NU) of the service (DI) is permitted, the checking being carried out taking into account an available capacity (C_{V})
- determined taking into account the overall transmission capacity (G), and
- which is made available to the access node (ZK) for transmitting traffic streams (VS) to the communications network.

2. Method according to Claim 1, **characterized in that** the service (DI) is embodied as a transmission of information (INF), in particular speech information (V), which is brought about using traffic streams (VS) which are transmitted with priority.

3. Method according to one of Claims 1 or 2, **characterized in that** the overall transmission capacity (G) depends at least partially on the transmission capacities (C) of the transmission paths (W) of the communications network (KN).

4. Method according to one of Claims 1 to 3, **characterized in that** the checking of the permissibility is carried out taking into account a service quality level (DG_{VS}) which is necessary for the use (NU) of the service (DI) and which is determined by the access control function (ZF).

5. Method according to Claim 4, **characterized in that** when a desired service quality level (DG_{A}) is specified when the use (NU) of the service (DI) is applied for, said service quality level (DG_{A}) is taken into account by the access control function (ZF) in the determination of the necessary service quality level (DG_{VS}).

6. Method according to one of the preceding claims, **characterized in that** the communications network (KN) is embodied as a DiffServ network (DN) which transmits traffic streams (VS) with an ensured service quality level (DG) in a packet-oriented fashion.

7. Method according to Claims 2 and 6, **characterized in that** the access control function (ZF) signals the permissibility of the traffic stream (VS) to be transmitted with priority during use (NU) of the service (DI) to the assigned access node (ZK), and said access node subsequently transmits the traffic stream (VS) with priority to the DiffServ network (DN).

8. Method according to one of the preceding claims, **characterized in that** the access control function (ZF) is implemented in a gatekeeper (GK).

9. Device, in particular gatekeeper (GK) or transmission node (K), comprising means for carrying out the steps of a method according to one of the preceding claims.

10. Communications network (KN), comprising at least one transmission node (K), in particular access node (K), according to Claim 9.

11. H. 323 zone or access network (LAN) of a communications network (KN), comprising at least one gatekeeper (GK) according to Claim 9.

## Revendications

1. Procédé de contrôle d'admissibilité de l'utilisation (NU) d'un service (DI) réalisé au sein d'au moins un réseau de communication (KN) présentant une capacité de transmission globale (G), dans lequel, en cours d'utilisation (NU) au moins un flux de trafic (VS) spécifique au service et associé au service (DI) est transmis au réseau de communication (KN) par un noeud d'accès (ZK) associé au service (DI), avec les étapes suivantes :
(1) l'utilisation (NU) est demandée auprès d'une fonction de commande d'accès (ZF) associée au noeud d'accès (ZK),
(2) sans demandes ultérieures auprès de noeuds de transmission internes du réseau de communication (KN), la fonction de commande d'accès (ZF) contrôle si l'utilisation demandée (NU) du service (DI) est autorisée,
le contrôle ayant lieu sous considération
d'une capacité (C_{V}) disponible
- déterminée sous considération de la capacité de transmission globale (G)
- et qui est à la disposition du noeud (ZK) pour la transmission de flux de trafic (VS) au réseau de communication.

2. Procédé selon la revendication 1, **caractérisé en ce que** le service (DI) est conçu sous forme d'une transmission d'informations (INF), notamment d'informations vocales (V), à l'aide de flux de trafic (VS) transmis préférentiellement.

3. Procédé selon l'une quelconque des revendications 1 ou 2, **caractérisé en ce que** la capacité de transmission globale (G) dépend au moins partiellement des capacités de transmission (C) des voies de transmission (W) du réseau de communication (KN).

4. Procédé selon l'une quelconque des revendications 1 à 3, **caractérisé en ce que** le contrôle d'admissibilité a lieu sous considération d'une qualité de service (DG _{VS}) requise pour l'utilisation (NU) du service (DI), qui est déterminée par la fonction de commande d'accès (ZF).

5. Procédé selon la revendication 4, **caractérisé en ce que** si une qualité de service souhaitée (DGA) est indiquée lors de la demande d'utilisation (NU) du service (DI), elle est prise en considération par la fonction de commande d'accès (ZF) lors de la détermination de la qualité de service requise (DG _{VS}).

6. Procédé selon l'une quelconque des revendications précédentes, **caractérisé en ce que** le réseau de communication (KN) est conçu sous forme d'un réseau DiffServ (DN) diffusant par paquets des flux de trafic (VS) avec une qualité de service (DG) garantie.

7. Procédé selon l'une quelconque des revendications 2 à 6, **caractérisé en ce que** la fonction de contrôle d'accès (ZF) informe le noeud d'accès (ZK) associé au sujet de l'admissibilité du flux de trafic (VS) devant être transmis de préférence lors de l'utilisation (NU) du service (DI) et celui-ci transmet ensuite le flux de trafic (VS) de préférence au réseau DiffServ (DN).

8. Procédé selon l'une quelconque des revendications précédentes, **caractérisé en ce que** la fonction de contrôle d'accès (ZF) est réalisée dans un gatekeeper (GK).

9. Dispositif (notamment gatekeeper (GK) ou noeud de transmission (K)), comprenant des moyens pour la réalisation des étapes d'un procédé selon l'une quelconque des revendications précédentes.

10. Réseau de communication (KN), comprenant au moins un noeud de transmission (K) (notamment un noeud d'accès (K)) selon la revendication 9.

11. Zone H.323 ou réseau d'accès (LAN) d'un réseau de communication (KN), comprenant au moins un gatekeeper (GK) selon la revendication 9.
